# EUROPEAN PATENT SPECIFICATION

(11) **EP 0 412 221 B1**
(45) Date of publication and mention of the grant of the patent: **22.02.1995**
(21) Application number: 89312299.4
(22) Date of filing: 28.11.1989
(51) Int. Cl.: G11B 21/02, G11B 21/10, G11B 21/16

(54) **Apparatus for centering a transducer over a track of a magnetic disk**
Gerät zum Zentrieren eines Wandlers über eine Spur einer Magnetplatte
Appareil pour centrer un transducteur sur la piste d'un disque magnétique

(30) Priority: 07.08.1989 US 390178
(43) Date of publication of application: 13.02.1991
(73) Proprietor: SEAGATE TECHNOLOGY INTERNATIONAL, Georgetown, Grand Cayman Island (KY)
(72) Inventor: Birtzer, Mark L., Bloomington Minnesota 55431 (US)
(74) Representative: Sturt, Clifford Mark

(56) References cited:
- US-A- 954 682
- US-A- 4 814 908
- PATENT ABSTRACTS OF JAPAN, unexamined applications, P field, vol. 9, no. 323,December 18, 1985 THE PATENT OFFICE JAPANESE GOVERNMENT page 26 P 414

## Description

This invention relates to apparatus for centering transducers over tracks on magnetic disks.

In drive systems, there is typically a stack of disks which are spaced apart and mounted on a spindle. Data heads, which carry transducers that read and write information on the disks are attached to arms which extend between the disks so that the data heads fly over the disks. The arms are attached to an actuator which is moved to position the data heads over data tracks on the disks. If the data heads are to read and write information reliably on the disks, the transducers must be centered over the data tracks. Therefore, a closed loop feedback system is desirable for positioning the data heads over the tracks.

One method of positioning the data heads over the tracks on the disks which uses a closed loop feedback circuit, is the dedicated servo method. In the dedicated servo method, one data head and one disk in the disk drive system are dedicated to the task of acquiring position information. The dedicated data head is referred to as the servo head and the dedicated disk is referred to as the servo disk. The servo head is connected to a designated servo arm which is coupled to the same actuator as the other arms. The servo head is held over the centre of a desired track on the servo disk by a closed loop servo system which utilises feedback from specially written data on the servo disk to position properly the actuator. Since the other arms are rigidly attached to the actuator, they follow the servo arm and are positioned over the desired tracks on their respective disks.

Although the servo head is in the closed loop feedback circuit with the servo disk, the other data heads and other disks do not have the benefit of a separate closed loop feedback system to assure that they are properly positioned. Thus, in order to function properly, the other disks and heads must maintain their original position with respect to the servo head and the servo disk over extended periods of time. Maintaining this position is often difficult because of shifts in the relative head position due to temperature extremes and mechanical wear. If all the data heads, arms and disks do not maintain their positions relative to the servo head and the servo disk, off track errors will result. Off track errors reduce read margins and may cause data errors.

One method for correcting the problem of position shifting due to temperature extremes and mechanical wear is disclosed in U.S. Patent No. 4,814,908. In this method, a heating element, such as a resistor, is embedded in one side of each of the arms. When power is applied to the resistor, heat is generated which expands and contracts the material in the arm, thereby bending the arm so as to move the head in an arcuate path which is substantially transverse to the tracks on the disk. A feedback loop is constructed around the head in which a parameter of the read back signal is compared to a desired value to form an error term. The error term is then used to set the power level which is applied to the resistor. In this way, the data head on each arm can be independently centered within the tracks on the disk.

Whilst this system has significant advantages, there are several short comings. First, it is desirable to be able to move the data head in both directions along the arcuate path. Therefore, even when no correction is required, a certain power level must be maintained in the resistor to allow movement in both directions. This results in power being dissipated even when no correction is required. Also, since power must be maintained even when no correction is required, in the event that a component failure causes loss of power to the resistor, large off track errors will result.

A second disadvantage is that the method of comparing a parameter of the read signal to a desired value is very prone to error. The characteristics of read signals from tracks on magnetic disks vary greatly from disk drive system to disk drive system and also vary depending on a number of head and disk parameters. In addition, the characteristics of read signals vary greatly from the inner radius to the outer radius on any particular disk. Therefore, it is very difficult to establish a proper value for the sensed parameter for comparison.

Finally, the feedback loop disclosed in U.S. Patent No. 4,814,908 (Application Serial No. 937,270) does not contain compensation. In order to achieve a desirable system response, some type of compensation is required.

Therefore, there is a continuing need for apparatus which will centre transducers over tracks on disks in disk drive systems.

According to one aspect of the present invention there is provided an apparatus for positioning a transducer over the centre of a track in a magnetic disk, the apparatus having an arm with a first end attached to an actuator for rotating the arm, and a second end attached to a slider carrying a transducer, the arm including first and second arm portions extending between the first and second ends, the arm portions being spaced at the first end of the arm, first means for selectively applying thermal energy to the first arm portion to cause the arm to bend and move the slider along an arcuate path in a first direction to position the transducer over the centre of the track; and characterised by second means for selectively applying thermal energy to the second arm portion to cause the arm to bend and move the slider along the arcuate path in a second direction to position the transducer over the centre of the track.

In one embodiment the first heating element is carried by the or each first arm portion, and the second heating element is carried by the or each second arm portion. The apparatus may include position indicating means for providing a position signal indicating when the transducer on the or a selected one of the arms is tracking off centre, and heat controlling means for selectively varying the amount of heat applied to the first and second arm portions as a function of the position signal.

The apparatus preferably is in combination with one or more disks, the or each disk having a plurality of sectors for containing information, the position signal, in operation, including position data indicating the distance the transducer is on the or a selected one of the arms from the centre of the respective track, the position data being recorded on at least one of the sectors on the or the corresponding disk.

In operation the position signal may comprise a modulated signal representing the position data which the transducer on the or a selected one of the arms passes over as the transducer passes over the sector containing the position data.

The position indicating means, in one embodiment, includes a demodulator for demodulating the modulated signal to produce a demodulated position signal.

The heat controlling means preferably comprises: compensation means for compensating the position signal, means for determining a correction value based on the compensated position signal, the correction value representing a distance that the transducer on the or a selected one of the arms is from the centre of the track, and a heat element power supply which varies power delivered to the first heating element and the second heating element as a function of the correction value.

The apparatus may include arm selection means for selecting an arm to be corrected.

The invention is illustrated, merely by way of example, in the accompanying drawings, in which:-
Figure 1 is a top view of an arm of apparatus according to the present invention positioned over a magnetic disk where a portion of the arm is cut away to show heating elements;
Figure 2 is an enlarged diagram of the arm shown in Figure 1;
Figure 3 shows the arm of Figure 1 in a block diagram of a feedback loop; and
Figure 4 shows a block diagram of a feedback control loop used with a plurality of arms of apparatus according to the present invention.

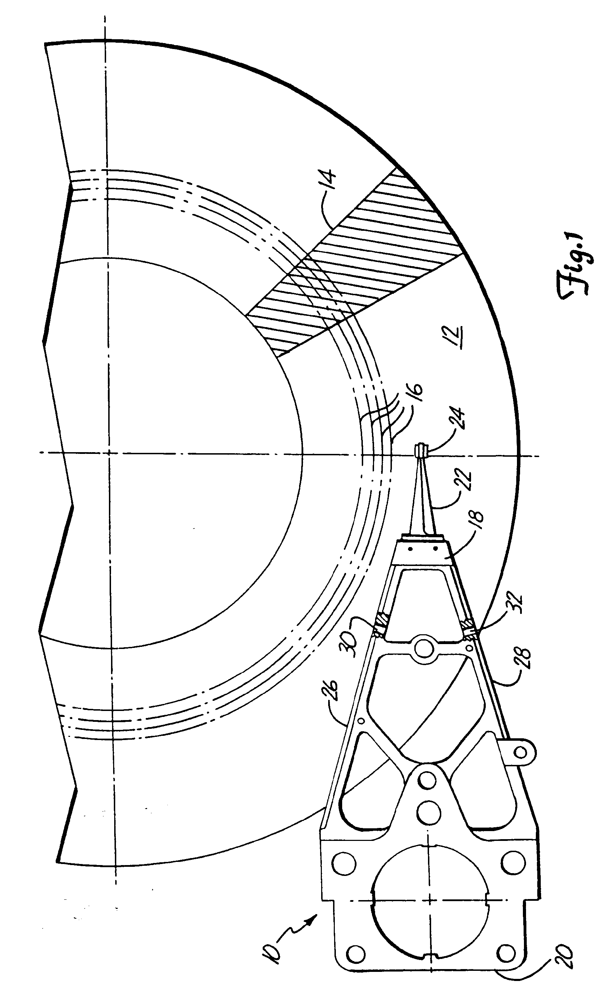

Figure 1 shows one embodiment of apparatus according to the present invention. A thermally compensated fixed arm 10 is shown positioned over a magnetic disk 12. The disk 12 includes a plurality of zones, including a position zone 14, and a plurality of tracks 16.

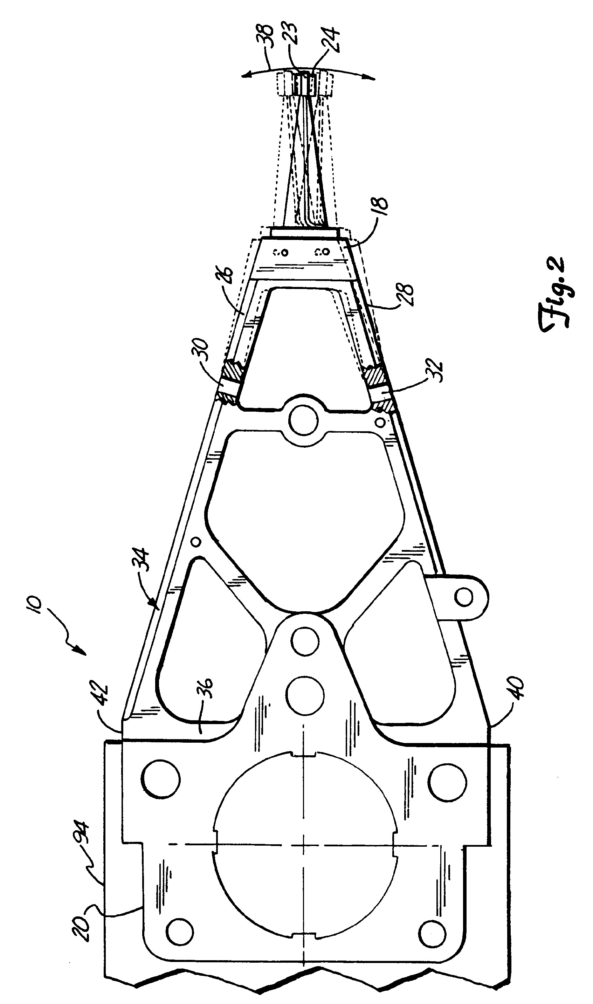

The arm 10 includes a free end 18 and an attached end 20. An extender 22 is attached to the free end 18 and to a slider 23 (Figure 2). The slider 23 is attached to a transducer 24. The attached end 20 of the arm 10 is attached to an actuator (not shown) which pivots the arm 10 to move the transducer 24 from track to track on the disk 12.

The arm 10 also includes a first arm portion 26 and a second arm portion 28. The arm portions 26, 28 extend between the free end 18 and the attached end 20 of the arm 10. The first arm portion 26 is in spaced apart relation to the second arm portion 28 at the attached end 20.

First and second heating elements 30, 32 are attached to the first arm portion 26 and the second arm position 28, respectively. The heating elements 30, 32 are resistors and are embedded in the arm portions 26, 28, respectively.

The arm 10, and particularly the arm portions 26, 28 thereof, is made of a material such as metal, plastics or a composite material which expands upon heating and contracts upon cooling. Therefore, when the first heating element 30 heats up, the arm portion 26 expands as a function of the co-efficient of linear expansion for the particular material of which it is formed. Consequently, the transducer 24 moves in a direction across the particular track 16 over which it is positioned. When the heating element 30 cools, and thus when the arm portion 26 of the arm 10 cools, the arm portion 26 contracts as a function of the co-efficient of linear expansion and the transducer 24 moves across the particular track 16 in the opposite direction.

Similarly, when the heating element 32 heats up, the arm portion 28 expands as a function of the co-efficient of linear expansion for the particular material of which it is formed. Consequently, the transducer 24 moves in a direction across the particular track 16 over which it is positioned. When the heating element 32 cools, and thus when the arm portion 28 of the arm 10 cools, the arm portion 28 contracts as a function of the coefficient of linear expansion and the transducer 24 moves across the track in the opposite direction. The range of movement described above (which is typically in terms of micro-inches) and the particular direction of movement depends on the geometry of the arm 10, the material from which the arm 10 is made and the temperature rise or drop in the arm portions 26, 28.

Figure 2 illustrates the motion of the arm 10 during operation. The arm 10 is shown essentially as a triangle 34 having a fixed base 36 and two variable length legs. The variable length legs comprise the arm portion 26 and the arm portion 28, respectively. The extender 22, which is attached to the transducer 24 by the slider 23, is positioned near the inter-section of the arm portions 26, 28. It is assumed that the base 36 is fixed because an actuator 94 does not move once it pivots the arm 10 so that the transducer 24 is positioned over a particular track 16 on the disk 12.

When the heating element 30 is heated up, the arm portion 26 expands and the resulting motion is essentially along an arc 38. The movement along the arc 38 results from the arm portion 28 pivoting about a point 40 where the arm portion 28 is attached to the base 36.

Similarly, as the heating element 32 heats up, the arm portion 28 expands resulting in movement along the arc 38. The movement along the arc 38 results from the arm portion 26 pivoting about a point 42 where the arm portion 26 is attached to the base 36. The nominal position (the position of the transducer 24 when neither the heating element 30 nor the heating element 32 are heated) is shown in solid lines in Figure 2. Two additional positions of the arm 10 are shown in broken lines. The amount of actual movement is very slight and the two additional positions are exaggerated in order to illustrate the motion. Furthermore, in order to keep Figure 2 from becoming cluttered, broken lines are shown along only the free end 18 of the triangle 34.

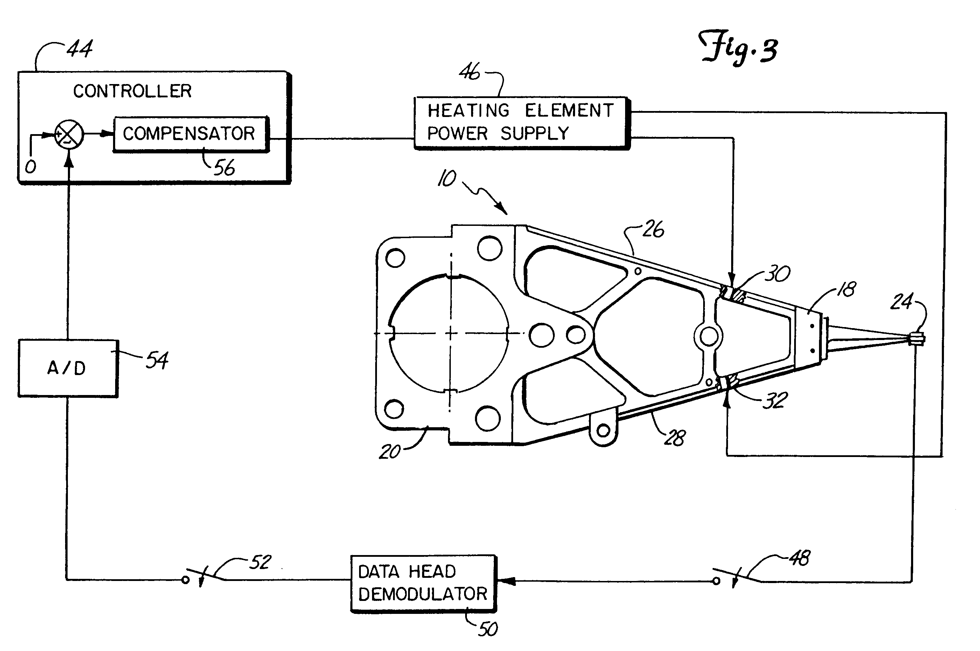

Figure 3 shows the arm 10 as used in a feedback control circuit. The feedback control circuit includes a controller 44, a heating element power supply 46, a head selector 48, a data head demodulator 50 and a switch 52. The feedback control circuit operates to centre the transducer 24 over the particular track 16 on the disk 12 over which it is travelling.

With each revolution of the disk 12, the transducer 24 (see Figure 1) passes over the position zone 14. Information is written in the position zone 14 such that, when it is de-coded, it provides a voltage which is proportional to the distance that the transducer 24 has moved from the centre of the track 16. Therefore, with each revolution of the disk 12, a small burst of position information is read from the disk 12.

Often, the arm 10 in Figure 3 is part of a large disk drive system including a plurality of arms. Therefore the head selector 48 selects one of a plurality of arms to be re-positioned. When the arm 10 shown in Figure 3 is selected, the position information read from the disk 12 by the transducer 24 is supplied to the data head demodulator 50. The data head demodulator 50 de-codes the position information retrieved from the disk 12 and provides an analog voltage which is proportional to the distance that the transducer 24 has moved from the centre of the track 16. When the analog switch 52 is closed, the analog voltage provided by the data head demodulator 50 is provided to an analog-to-digital (A/D) converter 54. The A/D converter 54, in turn, provides a digital signal to the controller 44, the digital signal being representative of the analog voltage provided by the data head demodulator 50.

If the transducer 24 is tracking directly over the centre of the track 16 over which it is travelling, the digital signal provided by the A/D converter 54 will be zero and no position correction is required. However, if the controller 44 determines that the digital signal provided by the A/D converter 54 is non-zero, then the controller 44 must determine a correction value. To determine the correction value, the controller 44 performs compensation calculations for a compensator 56 which outputs the correction value based on those calculations. The parameters of the compensator 56 are chosen to compensate the digital signal provided by the A/D converter 54 so that the feedback control circuit has a desired response. In one embodiment, the compensator 56 is a digital filter. The controller 44 performs digital filter calculations for the digital filter thereby determining the correction value.

The correction value from the controller 44 is a voltage which is supplied to the power supply 46. The heating element power supply 46 controls the heating elements 30, 32 independently to produce an amount of heat proportional to the desired correction value. The power supply 46 produces a power output which corresponds to the correction value provided by the controller 44. The heating elements 30, 32 convert the power supplied to them into heat, thereby heating and causing expansion in the arm portions 26, 28, respectively. Therefore, the correction value which is provided to the power supply 46 in volts is converted to micro-inches of movement through the interaction of the power supply 46, the heating elements 30, 32 and the arm portions 26, 28.

Also, since the power supply 46 controls the heating elements 30, 32 independently, power will be supplied to only one heating element (30 or 32) to correct the position of the arm 10. In other words, power will be supplied to the heating element 30 for correction in one direction, and power will be supplied to the heating element 32 for correction in the opposite direction. Moreover, where no correction is required, there will be no power supplied to either of the heating elements 30, 32.

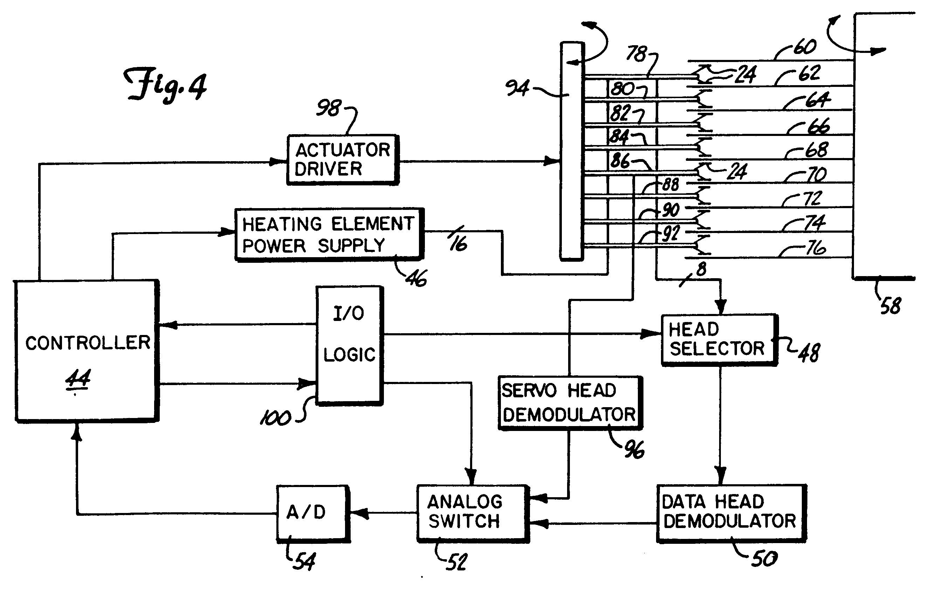

Figure 4 is a block diagram of a control circuit for controlling arm position in a disk drive system with a plurality of disks and a plurality of arms. The disk drive system includes a spindle 58 which supports the plurality of magnetic disks 60, 62, 64, 66, 68, 70, 72, 74, 76 (collectively referred to as disks 60 - 76). The disks 60 - 76 are mounted for rotation with the spindle 58. The disk drive system also includes a plurality of arms 78, 80, 82, 84, 86, 88, 90, 92 (collectively referred to as arms 78 - 92) each of which is of substantially the same construction as the arm 10 shown in Figures 1 to 3. Each of the arms 78 - 92 is provided with a pair of transducers 24 (with the exception of the arm 86 which has only one transducer 24) which fly over surfaces on the disks 60 to 76. In addition, the arms 78 - 92 are mounted to the actuator 94 which operates to pivot the arms 78 - 92 from track to track on the disks 60 - 76.

The control circuit includes the controller 44, the heating element power supply 46, the head selector 48, the data head demodulator 50, the analog switch 52, the A/D converter 54, a servo head demodulator 96, an actuator driver 98 and input/output (I/O) logic 100.

The arm 86 serves as the servo arm, and the transducer associated with the arm 86 reads servo head position information from the servo disk 68. The servo head position information is provided to the servo head demodulator 96 which decodes the position information and provides an analog voltage indicating the position of the servo arm 86 to the analog switch 52. At regular intervals, the controller 44 provides a signal to the I/O logic 100 causing the analog switch 52 to pass the analog voltage provided by the servo head demodulator 96 to the A/D converter 54. The A/D converter 54 provides a digital signal to the controller 44 which represents the analog voltage provided by the servo head demodulator 96. Based on this digital signal, the controller 44 calculates a correction value and provides it to the actuator driver 98. The actuator driver 98 causes the actuator 94 to rotate in response to the correction value to maintain the transducer 24 on the servo arm 86 over the centre of the particular track 16 over which it is travelling.

At one point during each revolution of the spindle 58, a signal from the servo head demodulator 96 indicates that the position zones 14 on the disks 60 - 66 and 70 - 76 is about to pass the transducers 24 on the arms 78 - 84 and 88 - 92. At that point, the I/O logic 100 switches the head selector 48 to read position information from a desired arm 78 - 84 or 88 - 92. The data head demodulator 50, as discussed above, decodes the information provided by the selected arm into a voltage proportional to the distance that the transducer 24 on the selected arm has moved from the centre of the track 16. The controller 44 samples this de-coded information by causing the I/O logic 100 to switch the analog switch 52 so that it passes the signal provided by the data head demodulator 50. After the information is converted to a digital value by the A/D converter 54, the controller 44 performs digital filter computations and determines a correction value for the selected arm.

The correction value is provided to the power supply 46 which supplies enough power to the desired heating element in the selected arm to produce an amount of heat which is proportional to the desired correction value.

On the next revolution of the spindle 58, the I/O logic 100 causes the head selector 48 to choose a different arm for correction. The position of the transducer on the selected arm is sampled by the controller 44 and corrected through the power supply 46. Similarly, on each subsequent revolution of the spindle 58, the head selector 48 chooses another arm for correction. Once all of the arms have been sampled and corrected, the sequence of selection by the head selector 48 is repeated. This results in a constant sample rate for each of the arms.

The present invention allows a plurality of transducers 24 on a plurality of arms 78 - 92 to be accurately positioned over the centre of tracks 16 on respective magnetic disks. Since each arm has heating elements 30, 32, each of which are positioned in a separate respective arm portion 26, 28, the power output of the correction system is zero when no correction is required. Also, even where some correction is required, but where it is not large, if a component in the feedback loop fails thereby causing power supplied to the heating elements 30, 32 to be interrupted, no large off track errors will result.

In addition, the actual demodulated transducer position is read from a position zone 14 on the disk. Therefore, position correction with the present invention does not rely on a comparison of a parameter of the read signal with a desired parameter. This substantially reduces the probability of error.

Further, the present invention includes compensation, such as a digital filter, to shape the response in the feedback control loop. Therefore, the parameters of the compensator can be chosen so that the control loop has a desirable response.

## Claims

1. Apparatus for positioning a transducer (24) over the centre of a track (16) in a magnetic disk (12), the apparatus having an arm (10) with a first end (20) attached to an actuator for rotating the arm, and a second end (18) attached to a slider (23) carrying a transducer (24), the arm (10) including first and second arm portions (26, 28) extending between the first and second ends (18, 20), the arm portions being spaced at the first end (20) of the arm, first means (30) for selectively applying thermal energy to the first arm portion (26) to cause the arm (10) to bend and move the slider (23) along an arcuate path in a first direction to position the transducer (24) over the centre of the track (16); and characterised by second means (32) for selectively applying thermal energy to the second arm portion (28) to cause the arm (10) to bend and move the slider along the arcuate path in a second direction to position the transducer (24) over the centre of the track (16).

2. An apparatus as claimed in claim 1 in which there are a plurality of transducers and a plurality of magnetic disks, at least one transducer corresponding to a respective disk.

3. An apparatus as claimed in claims 1 and 2 in which said first and second means apply thermal energy for the positioning of the transducer.

4. An apparatus as claimed in any preceding claim, in which the first means (30) is carried by the or each first arm portion (26), and the second means (32) is carried by the or each second arm portion (28).

5. An apparatus as claimed in any preceding claim, including position indicating means (24, 48, 50, 52, 96) for providing a position signal indicating when the transducer (24) on the or a selected one of the arms (10, 78-92) is tracking off centre, and heat controlling means (44, 46, 56) for selectively varying the amount of heat applied to the first and second arm portions on the or a selected one of the arms (26, 28) as a function of the position signal.

6. An apparatus as claimed in claim 5 characterised by being in combination with one or more disks (12, 60-76), the or each disk having a plurality of sectors for containing information, the position signal, in operation, including position data indicating the distance the transducer (24) is on the or a selected one of the arms (10, 78-92) from the centre of the respective track (16), the position data being recorded on at least one of the sectors on the or the corresponding disk.

7. An apparatus as claimed in claim 6 characterised in that, in operation, the position signal comprises a modulated signal representing the position data which the transducer (24) on the or a selected one of the arms (10, 78-92) passes over as the transducer passes over the sector containing the position data.

8. An apparatus as claimed in claim 7 characterised in that the position indicating means includes a demodulator (50, 96) for demodulating the modulated signal to produce a demodulated position signal.

9. An apparatus as claimed in any of claims 5 to 8 characterised in that the heat controlling means comprises: compensation means (56) for compensating the position signal, means (44) for determining a correction value based on the compensated position signal, the correction value representing a distance that the transducer (24) on the or a selected one of the arms (10, 78-92) is from the centre of the track (16), and a heat element power supply (46) which varies power delivered to the first heating element and the second heating element as a function of the correction value.

10. Apparatus as claimed in claim 2 or any of claims 3 to 9 when dependent thereon characterised by including arm selection means (48) for selecting an arm to be corrected.

11. Apparatus according to any preceding claim, in which the first and second means (30, 32) for applying thermal energy cause micro-inches (1 micro-inch = 25.4 nm) of movement of the transducer (24).

## Patentansprüche

1. Vorrichtung zur Positionierung eines Wandlers (24) über dem Mittelpunkt einer Spur (16) in einer Magnetplatte (12), wobei die Vorrichtung einen Arm (10) mit einem ersten an einem Stellglied zur Drehung des Armes befestigten Ende (20) und einem zweiten, an einem einen Wandler (24) tragenden Gleiter (23) befestigten Ende (18) aufweist, wobei der Arm (10) erste und zweite Armteile (26, 28) einschließt, die sich zwischen den ersten und zweiten Enden (18, 20) erstrecken und wobei die Armteile an dem ersten Ende (20) des Armes in Abstand voneinander angeordnet sind, und erste Einrichtungen (30) zur selektiven Zuführung thermischer Energie an den ersten Armteil (26) derart einschließt, daß eine Biegung des Armes (10) und eine Bewegung des Gleiters (23) entlang einer bogenförmigen Bahn in einer ersten Richtung zur Positionierung des Wandlers (24) über dem Mittelpunkt der Spur (16) hervorgerufen wird, gekennzeichnet durch zweite Einrichtungen (32) zur selektiven Zuführung thermischer Energie an den zweiten Armteil (28), um zu bewirken, daß der Arm (10) sich biegt und den Gleiter entlang der bogenförmigen Bahn in einer zweiten Richtung bewegt, um den Wandler (24) über den Mittelpunkt der Spur (16) zu bewegen.

2. Vorrichtung nach Anspruch 1, bei der eine Mehrzahl von Wandlern und eine Mehrzahl von Magnetplatten vorgesehen ist, wobei zumindestens ein Wandler einer jeweiligen Platte entspricht.

3. Vorrichtung nach Anspruch 1 oder 2, bei der die ersten und zweiten Einrichtungen thermische Energie für die Positionierung des Wandlers liefern.

4. Vorrichtung nach einem der vorhergehenden Ansprüche, bei der die erste Einrichtung (30) von dem oder jedem ersten Armteil (26) getragen wird, während die zweite Einrichtung (32) von dem oder jdem zweiten Armteil (28) getragen wird.

5. Vorrichtung nach einem der vorhergehenden Ansprüche, unter Einschluß von Positionsanzeigeeinrichtungen (24, 48, 50, 52, 96) zur Lieferung eines Positionssignals, das anzeigt, wenn der Wandler (24) auf dem oder einem ausgewählten der Arme (10, 78 - 92) eine Spurabweichung aufweist, und Wärmesteuereinrichtungen (44, 46, 56) zur selektiven Änderung der Wärmemenge, die den ersten und zweiten Armteilen auf dem oder einem ausgewählten der Arme (26, 28) zugeführt wird, als Funktion des Positionssignals.

6. Vorrichtung nach Anspruch 5,
dadurch gekennzeichnet, daß sie mit einer oder mehreren Platten (12, 60 - 76) kombiniert ist, wobei die oder jede Platte eine Vielzahl von Sektoren zur Aufnahme von Informationen aufweist, wobei das Positionssignal im Betrieb Positionsdaten einschließt, die die Strecke anzeigen, um die der Wandler (24) auf dem oder einem ausgewählten der Arme (10, 78 - 92) von dem Mittelpunkt der jeweiligen Spur (16) entfernt ist, wobei die Positionsdaten auf zumindestens einem der Sektoren der entsprechenden Platte oder der entsprechenden Platten aufgezeichnet sind.

7. Vorrichtung nach Anspruch 6,
dadurch gekennzeichnet, daß im Betrieb das Positionssignal ein moduliertes Signal umfaßt, das die Positionsdaten darstellt, die der Wandler (24) auf dem oder einem ausgewählten der Arme (10, 78 - 92) durchläuft, während der Wandler über den die Positionsdaten enthaltenden Sektor läuft.

8. Vorrichtung nach Anspruch 7,
dadurch gekennzeichnet, daß die Positionsanzeigeeinrichtung einen Demodulator (50, 96) zur Demodulation des modulierten Signals zur Erzeugung eines demodulierten Positionssignals einschließt.

9. Vorrichtung nach einem der Ansprüche 5 bis 8,
dadurch gekennzeichnet, daß die Wärmesteuereinrichtung folgende Teile umfaßt: eine Kompensationseinrichtung (56) zur Kompensation des Positionssignals, Einrichtungen (44) zur Bestimmung eines Korrekturwertes auf der Grundlage des kompensierten Positionssignals, wobei der Korrekturwert eine Strecke darstellt, um die der Wandler (24) auf dem oder einem ausgewählten der Arme (10, 78, 92) gegenüber dem Mittelpunkt der Spur (16) versetzt ist und eine Heizelement-Leistungsversorgung (46), die die dem ersten Heizelement und dem zweiten Heizelement zugeführte Leistung als Funktion des Korrekturwertes ändert.

10. Vorrichtung nach Anspruch 2 oder einem der Ansprüche 3 bis 9 unter Rückbeziehung hierauf,
dadurch gekennzeichnet, daß sie Armauswahleinrichtungen (48) zur Auswahl eines zu korrigierenden Armes einschließt.

11. Vorrichtung nach einem der vorhergehenden Ansprüche, bei der die ersten und zweiten Einrichtungen (30, 32) zur Zuführung thermischer Energie eine Bewegung des Wandlers (24) im Bereich von Mikrozoll (1 Mikrozoll = 25.4 nm) hervorrufen.

## Revendications

1. Appareil pour positionner un transducteur (24) au-dessus du centre d'une piste (16) dans un disque magnétique (12), l'appareil ayant un bras (10) avec une première extrémité (20) fixée à un actionneur pour faire tourner le bras, et une deuxième extrémité (18) fixée à un curseur (23) portant un transducteur (24), le bras (10) comprenant des première et deuxième portions de bras (26, 28) s'étendant entre les première et deuxième extrémités (18, 20), les portions de bras étant espacées sur la première extrémité (20) du bras, des premiers moyens (30) pour appliquer sélectivement de l'énergie thermique à la première portion de bras (26) pour faire fléchir le bras (10) et déplacer le curseur (23) le long d'une trajectoire arquée dans une première direction pour positionner le transducteur (24) au-dessus du centre de la piste (16), et caractérisé par des deuxièmes moyens (32) pour appliquer sélectivement de l'énergie thermique à la deuxième portion de bras (28) pour faire fléchir le bras (10) et déplacer le curseur le long d'une trajectoire arquée dans une deuxième direction pour positionner le transducteur (24) au-dessus du centre de la piste (16).

2. Appareil selon la revendication 1, dans lequel se trouvent une pluralité de transducteurs et une pluralité de disques magnétiques, au moins un transducteur correspondant à un disque respectif.

3. Appareil selon la revendication 1 ou 2, dans lequel lesdits premiers et deuxièmes moyens appliquent de l'énergie thermique pour le positionnement du transducteur.

4. Appareil selon l'une quelconque des revendications précédentes, dans lequel les premiers moyens (30) sont portés par la ou chaque première portion de bras (26) et les deuxièmes moyens (32) sont portés par la ou chaque deuxième portion de bras (28).

5. Appareil selon l'une quelconque des revendications précédentes, comprenant des moyens indicateurs de position (24, 48, 50, 52, 96) pour fournir un signal de position indiquant lorsque le transducteur (24) sur le ou l'un choisi des bras (10, 78-92) est décentré, et des moyens de contrôle de chaleur (44, 46, 56) pour varier sélectivement la quantité de chaleur appliquée aux première et deuxième portions de bras sur le ou l'un choisi des bras (26, 28) en fonction du signal de position.

6. Appareil selon la revendication 5, caractérisé par le fait d'être en combinaison avec un ou plusieurs disques (12, 60-76), le ou chaque disque ayant une pluralité de secteurs pour contenir une information, le signal de position, en fonctionnement, comprenant une donnée de position indiquant la distance à laquelle le transducteur (24) se trouve sur le ou l'un choisi des bras (10, 78-92) du centre de la piste respective (16), la donnée de position étant enregistrée sur au moins l'un des secteurs du disque ou du disque correspondant.

7. Appareil selon la revendication 6, caractérisé en ce qu'en fonctionnement, le signal de position comprend un signal modulé représentant la donnée de position que le transducteur (24) transmet sur le ou l'un choisi des bras (10, 78-92) lorsque le transducteur passe au-dessus du secteur contenant la donnée de position.

8. Appareil selon la revendication 7, caractérisé en ce que les moyens indicateurs de position comprennent un démodulateur (50, 96) pour démoduler le signal modulé pour produire un signal de position démodulé.

9. Appareil selon l'une quelconque des revendications 5 à 8, caractérisé en ce que les moyens de contrôle de chaleur comprennent: des moyens de compensation (56) pour compenser le signal de position, des moyens (44) pour déterminer une valeur de correction basée sur le signal de position compensé, la valeur de correction représentant une distance à laquelle le transducteur (24) sur le ou l'un choisi des bras (10, 78-92) se trouve du centre de la piste (16), et une alimentation électrique d'élément chauffant (46) qui change la puissance fournie au premier élément chauffant et au deuxième élément chauffant en fonction de la valeur de correction.

10. Appareil selon la revendication 2 ou l'une quelconque des revendications 3 à 9 si dépendante de celle-ci, caractérisé par le fait qu'il comprend des moyens de sélection de bras (48) pour choisir un bras à corriger.

11. Appareil selon l'une quelconque des revendications précédentes, dans lequel les premiers et deuxièmes moyens d'application d'énergie thermique (30, 32) provoquent des déplacements du transducteur (24) de l'ordre du micro-pouce (1 micro-pouce = 35,37 »m).
